# EUROPEAN PATENT SPECIFICATION

(11) **EP 0 482 273 B1**
(45) Date of publication and mention of the grant of the patent: **18.05.1994**
(21) Application number: 90870189.9
(22) Date of filing: 15.10.1990
(51) Int. Cl.: B65D 85/66

(54) **Reusable crate for handling heavy rolls of sheet material**
Wiederverwendbare Kiste zur Handhabung von schweren Folienrollen.
Support réutilisable pour la manutention des rouleaux lourds de matériau en feuille

(43) Date of publication of application: 29.04.1992
(73) Proprietor: MONSANTO EUROPE S.A., B-1150 Brussels (BE)
(72) Inventor: Vervaet, Jean Polydoor Emilienne, B-9250 Waasmunster (BE); Dejonckheere, Jozef Gerard Cornelius, B-9820 Merelbeke (BE)
(74) Representative: Ernst, Hubert

(56) References cited:
- US-A- 4 042 107
- US-A- 4 401 217

## Description

This invention relates to a crate, in particular to a reusable and stackable crate, which is suitable for handling heavy rolls of sheet material. The crate herein especially comprises a frame, adjustable lateral walls, adjustable front and rear walls and means for retaining the roll, in particular a hammock-type retention device made of flexible material, which device is attached to and forms integral part of the frame. The crate is especially useful for handling heavy rolls of pressure-sensitive sheet material.

Handling of heavy rolls of sheet material, particularly their storage and transportation, is known to be difficult and no broadly applicable viable solution is available and/or has been suggested as of yet. While various arrangements, inclusive of particular containers, have been suggested for solving these problems, the proposed solutions are frequently directed to a particular type of rolls or materials and are less appropriate for handling other types of rolls or materials.

Handling of heavy rolls of pressure-sensitive sheet material is known to be difficult and may require substantial precautions. Such rolls are currently stored and transported in box-type wooden containers, in which the roll is supported and immobilized by wedge-like conically shaped devices of foamed polystyrene or comparable non-flexible material. However, handling of the rolls in this way may, and frequently does, affect the quality of the sheets.

In addition, such containers (wooden boxes) are fairly large and normally used one-way and are consequently economically unattractive.

US-A-4 151 914 describes, according to the preamble of claim 1, a shipping and storage container for rolls of sheet material having a central tubular supporting core with freely projecting end portions. Cradling means are provided for supporting the roll by the free extending parts of its axis. The arrangement can be adjusted to accomodate a roll of a given length.

US-A-4 805 794 describes a container for housing a metal strip coil. The metal strip coil, which is resting on the bottom of the container, is immobilized by means of conical supports.

US-A-4 901 855 describes a roll-cargo container which securely holds a roll in position by means of a sliding frame member below the top frame member and by effect of bracket members set to the bottom frame and the sliding frame member.

It is an object of the invention to provide a crate which will allow an easy handling of heavy rolls of sheet material.

It is a further object of the invention to provide a crate which will allow an easy handling of different roll sizes of sheet material without a need for adjusting the roll-supporting means of the crate.

Still another object of the invention is to make available a stackable, foldable and reusable crate for heavy rolls of sheet material.

Yet another object of the invention relates to the procurement of a crate which is particularly suitable for the handling of heavy rolls of pressure- and handling-sensitive sheet material under conditions such that the desirable properties of the sheet material can be substantially kept intact.

These and other objects are met by the present invention which relates to a reusable crate for efficiently handling heavy rolls of sheet material, in particular heavy rolls of pressure-sensitive sheet material. The crate herein comprises a frame, means for retaining the roll by means of a hammock-type layer of flexible material which forms an integral part of the frame and adjustable walls to thus facilitate loading and unloading. The crate can be provided with means which enable an easy and safe stacking of said loaded crates, and further means which enable an easy folding and stacking of said empty crates.

An example of a reusable crate according to the invention is described hereinafter with reference to the accompanying drawings, in which:

Figure 1 represents a view of an execution of the crate which has partly been cut open to show its inside.

Figure 2 represents a view of the crate with the top wall panels, the front panel and side walls in an opened position.

Figure 3 represents a view of the crate with the side panels folded inwardly.

Figure 4 represents the upper part (16) of the vertical frame part (7) and shows the plug-type means (19).

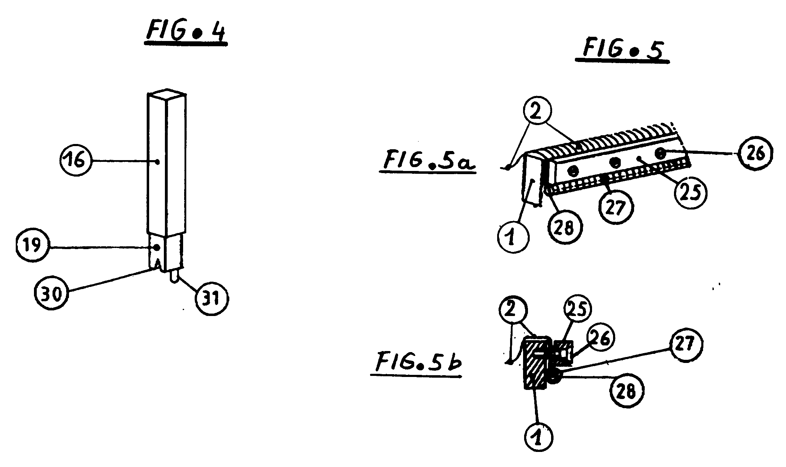

Figure 5 represents a method of fixation of the hammock-type layer to the frame: Figure 5a represents a lateral view and Figure 5b a cross-section of a hammock-type layer fixed to the frame.

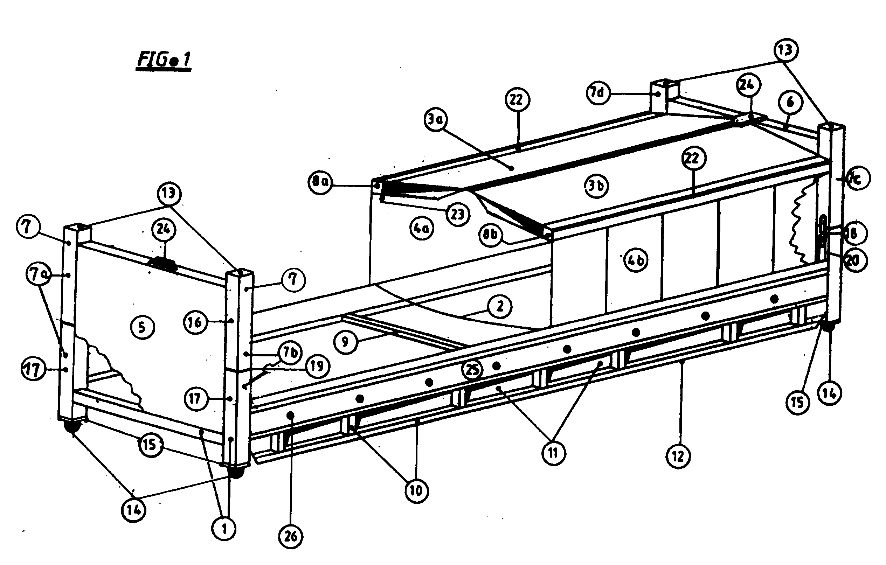

As shown by Figure 1, the crate comprises a frame (1), a hammock-type flexible means (2), a top wall composed of two panels (3a; 3b), two opposite lateral side walls (4a; 4b), a front wall (5) and an opposite rear wall (6).

The frame can be made from any suitable material inclusive of metal profiles, reinforced plastic and/or composite materials having in-use properties adapted to the required utilization. Such properties, inclusive of rigidity, weight and shock resistance and so on, are well known to the man-of-the-art. The materials and/or material combinations from which the crate and/or the frame can be made, can accordingly be selected routinely.

The frame is preferably made from metal profiles, for example, steel, galvanised steel, casted steel, aluminium and performancewise comparable alloys. The dimensions of the crate are choosen in accordance with its intended use. Thus the frame shall support repeatedly heavy weight loads without being subject to any substantial deformation phenomena or other physical alterations which could reduce the possibility of such repeated uses.

In a typical execution, the frame is constructed from a steel profile. Individual parts are connected to each other by appropriate techniques, known in the art, for example by welding or bolt connections. In a preferred execution, the frame is made from a galvanised or casted steel profile which has a circular, a rectangular and/or square cross section, whereby the composing parts are connected to each other by welding. The strength of the construction is considerable; consequently multiple crates containing, for example, heavy loads of sheet material can be stacked and transported easily without affecting in any manner the quality of the sheet material.

The frame comprises a rectangular base having in each corner a vertically projecting frame part (7; i.e. 7a; 7b; 7c; 7d). At about the top, the vertical parts (7) are interconnected, two by two, at the lateral side by an horizontal frame part (8a; 8b). Optionally, one or more transversal frame parts (9) may reinforce the rectangular base of the frame.

Optionally, the base of the frame is provided at both lateral sides with an additional construction (10), known in the art, which reinforces the rectangular base frame and has openings (11) which enable the handling of the crate by means of a e.g. fork-lift.

Optionally, the base frame can also be provided with a protective under-layer (12) made from e.g. wood, rubber or plastic material. This under-layer protects the conveyer system used for the transport of the crates from scratches and other incidental damage.

In a preferred execution, the frame parts (7a; 7b; 7c; 7d) have a square cross section and end, at the top side, with an opening (13) and, at the bottom part, with a projecting part (14), optionally a tubular part with or without a rounded closing end, the diameter of said projecting part (14) being slightly reduced compared to the cross section of the profile. These means (13 and 14) enable an easy and safe stacking of the crates by plugging the lower extending part (14) of the vertical frame part of an upper crate into the opening (13) of the upper vertical frame part of a lower crate. Optionally, stops, e.g. in the form of a rim (15), may be provided to the lower extending part (14) of the vertical frame part in order to facilitate stacking and unstacking of the crates.

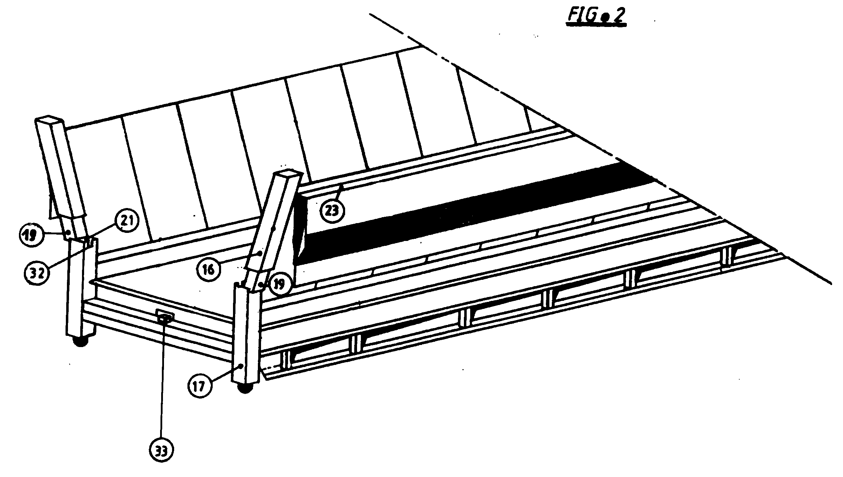

The vertical frame parts (7) comprise two parts (16 and 17) which are captively connected by means (18) known per se, which ensure a loose but firm connection between both parts (16 and 17). The said frame parts (16 and 17) fit to each other at a height of about 1/4 to about 3/4, preferably at a height of about 1/4 to 1/2, of the total height of the vertical frame part, by a plug-type means (19). This enables
(i) to widen the opening of the side walls of the crate by unplugging the captively connected parts (16 and 17) and setting parts (16) with the connected side panels, on frame parts (17) in an oblique position directed towards the outside, as shown in Fig. 2, and
ii) to refold an empty crate by unplugging the captively connected parts (16 and 17) and folding the upper vertical frame parts (16) with the attached side panels (4a; 4b) inwardly, as shown in Fig. 3.

In a typical execution, shown in Fig 1, means (18) may be located outside the transversal side of frame parts (7a; 7b; 7c and 7b), but inside the crate. Means (18) may consist of a metal part fixed to frame part (16) and having a pivot at its free end which can glide in a slit (20) in frame part (17) and block further disconnection of part (16) when it is unplugged. When part (16) is unplugged means (18) may pivot upon said pivot to thus enable the folding of part (16) and attached side wall inwardly the crate.

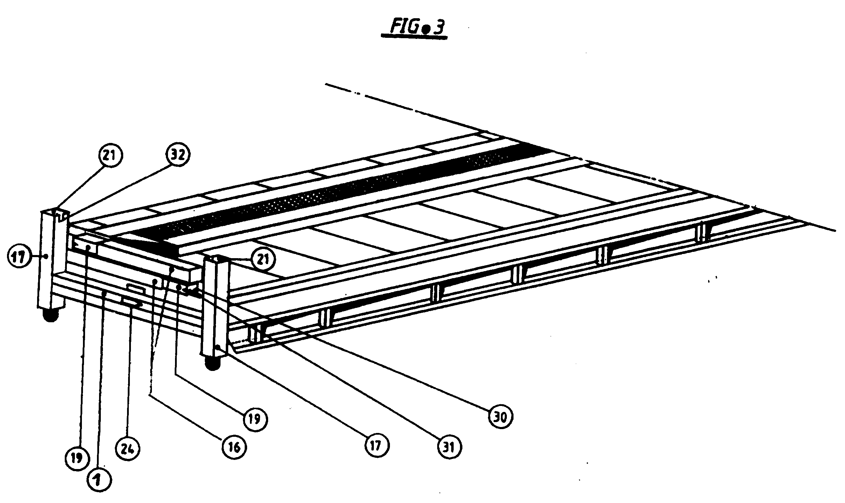

The means (19) are provided at the lower end with slits (30) which can serve to immobilize frame parts (16) with the attached side walls (4a and 4b), in relation to frame parts (17) in a stable, oblique opened position (see Fig.2). Means (19) are also provided with an extending means (31) (see Fig 4), e.g. a metal lath or bar, which is fixed to part (19) and having an extending length which is larger than the inner opening of frame part (17). When parts (17) are put upon parts (16) in an oblique, opened position, the means (31) will then block parts (17) in such a way that parts (17) with the attached side wall cannot accidentally fall outwards of the crate.

These features can facilitate the loading and unloading of heavy rols and increase safety during these operations.

When the upper vertical frame parts (16) are folded inwardly the crate, means (31) may move into a slit (32) in the side of vertical frame part (17), the slit being open at the top side to thereby free opening (21) at the upper end of the lower vertical frame parts (17). Opening (21) corresponds to the cross section of the vertical frame parts (7) and fits with the lower extending vertical frame parts (14) of an upper crate according to the invention, so enabling easy stacking of empty crates, which, of course, implies considerably improved ease-of-handling.

Inasmuch as the side walls mainly serve to protect the content of the crate from undesirable, external effects such as e.g. dust, sunshine, and unintentional contact with foreign objects, conventional, light-weight materials may be used for their construction. Suitable materials are for example aluminium, plated iron, plastic material, wood, multi-layer wooden panels and the like. The side wall may consist of one or may be made out of two or more overlapping or adjacent panel elements. The elements may be fixed, by known techniques, directly to the upper lateral frame parts (8a; 8b) or may be secured to a secundary rectangular frame which is fixed to the upper part of the primary lateral frame.

The front and back side panels (5; 6) are constructed such that they may be easily opened to thus free the front and back walls of the crate.

This feature enables loading and unloading of the roll by means of a lifting device whereby the lifting part can be inserted in the hollow axis of the roll.

In a preferred execution, the front and/or back panel may be constructed as one non-flexible panel or in the form of a rolling shutter. Both elements are captively fixed to the base frame in a manner known per se, so that they may easily be slided underneath the hammock-type layer to liberate the front and back opening of the crate.

The top wall of the crate is composed of two lateral panels (3a; 3b), made preferably from one of the light-weight materials mentioned above. The top panels can serve for closing the crate. Each top panel is connected to the corresponding lateral parts (8a; 8b) of the frame by means of hinges (22), which allow the opening of the panel towards the outside of the crate.

Furthermore, each of the top panels is provided, at the bottom side with a vertically projecting skirt (23) which, in closed position of the panel, comes in contact with the inner side of the upper lateral frame part (8a; 8b). In this way, the top panels are supported and refrain from collapsing inwards the crate when they are closed.

The front and/or back panels may be provided at the upper part with a locking device (24) known per se, which can be used to avoid the unintentional opening of the top panels, and with a blocking means (33) known per se, which supports the top panels (3a; 3b) when they are closed.

Optionally, and to provide additional strength to the top panel, the skirt (23) can be extended, bent in an adequate profile, and fixed to the bottom side of the top panel.

The means for retaining the roll comprise a hammock-type layer (2) of flexible material which is connected to the frame such that the hammock-type layer forms an integral part with the frame and remains firmly fixed when bearing the weight of a heavy roll.

The flexible layer may be made from any kind of a suitable flexible material, inclusive of woven or non-woven, naturally occuring and/or synthetical material and/or mixtures thereof. Suitable flexible materials comprise, for example, canvas, impregnated canvas, leather, rubber or plastic material which are reinforced with a natural or synthetic canvas, and the like. Preferred materials are canvas, impregnated canvas and reinforced plastics and combinations thereof.

The hammock may be constructed so as to comprise one single layer of flexible material or two or more layers thereof which optionally may be interconnected, for example by appropriate sewing or stitching techniques.

The hammock type material may be fixed to the lateral parts of the base frame by various techniques known per se provided they are adapted to meet and support physical stress conditions as e.g. resulting from the weight of the load.

The hammock may be fixed by pinching its laterally extending parts at the lateral sides of the crate, between the outer side of the base frame and an auxiliary means (25) fixed to the said outer part of the base frame by appropriate bolt or equivalent connections (26).

The auxiliary means can be, for example, a lath or profile in any suitable material, such as, for example, metal, reinforced plastic, wood and the like. In a preferred execution, the hammock may be fixed as mentioned above while, in addition, it is fixed over its whole length between said frame and the said means (25) by a wedge system obtained by insertion in a hem (27) provided alongside the lateral extending parts of the hammock, of a hard core (28), e.g. a rod or lath in any suitable hard material such as e.g. metal, wood, plastic, reinforced plastic, and the like, having a diameter or width which is larger than the slit width between the frame and the auxiliary means (25). In an alternative execution, the means (25), if being a metal lath or profile, may be connected to the base frame by appropriate welding, thereby leaving a slit with the required opening along the lateral side of the base frame. The width of the slit is at least equal to the thickness of the hammock layer, and is preferably slightly broader in order to facilitate insertion of the hammock layer into the slit.

To avoid damages to the roll by external effects, the crate may be equipped with a floor wall made from one or more panel elements in conventional, light-weight material, which can be fixed to the base of the frame.

The hammock-type roll retaining means ensure that the roll is firmly kept in place during handling of the crate. Optionally, in particular when a roll is handled having a diameter which is considerably smaller than the inner width of the crate, the roll immobilisation may be reinforced by means of conventional wedges or cushions such as e.g. preformed conical polystyrene foams, which can be placed between the top wall and/or the sidewalls and the roll.

The use of a hammock-type means for retaining the roll presents, compared to prior art systems, many advantages.

The hammock-type suspension of heavy rolls enables to spread the weight of the roll over a large contact area. This results in a significantly reduced weight-load pressure on the contact zone, compared to traditional roll retaining systems wherein the roll is resting on the floor wall, having just a small contact zone with resulting high weight-load pressure at the contact zone. Consequently, the hammock-type roll retaining system according to the invention is particularly useful for the handling of pressure sensitive materials such as, for example, sheet rolls of PVB (polyvinyl butyral), a plastic material which is used as interlayer in safety glass.

For example, this hammock-type system will enable to handle, without causing pressure damage, rolls of PVB-sheet far larger and heavier than what was possible up to now.

The hammock-type roll retaining system also enables to use, without making adaptions to the roll retaining system, rolls of different diameters, going up to a diameter which is slightly smaller than the inner distance between the side walls and which represents the optimal roll diameter.

Another advantage of the crate of the invention resides in the fact that its composing parts such as e.g. hammock-type layer, bottom-, side-, front- and top panels are easy to replace.

Furthermore the crate of the invention is reusable thus avoiding environmental problems related to packaging waste.

## Claims

1. A crate particularly suitable for handling heavy rolls of sheet material comprising a frame (1), means for retaining the roll, and walls, characterised in that the means for retaining the roll are presented by a hammock-type layer (2) of flexible material which is connected to the frame.

2. The crate in accordance with claim 1 wherein the vertical frame parts (7) comprise two parts (16;17) captively connected by means (18), such that upon unplugging, the upper parts (16) can, together with attached side panels (4a;4b), be folded inwardly the crate.

3. The crate in accordance with claim 2 wherein the crate is stackable by combining lower extending frame parts (14) of the upper crate with either corresponding openings (21) of the lower vertical frame parts (17) or with corresponding openings (13) of the upper vertical frame parts (16) of the lower crate.

4. The crate in accordance with any of claims 1 to 3 wherein the hammock-type flexible layer is made from canvas, impregnated canvas, leather, rubber, composite material, reinforced rubber or reinforced plastic material.

5. The crate of any of Claims 1 to 4 wherein the hammock-type layer is attached to the frame by means of a wedge system, formed by inserting a hard core material (28) into a hem (27) extending alongside the laterally extending parts of the hammock, and a slit formed by the base frame and auxiliary means (25).

## Patentansprüche

1. Kiste, insbesondere geeignet zur Handhabung schwerer Rollen aus Bahnmaterial, mit einem Rahmen (1), Mitteln zum Halten der Rolle und Wänden, dadurch gekennzeichnet, daß die Mittel zum Halten der Rolle von einer hängemattenartigen Schicht (2) aus biegsamem Material, die mit dem Rahmen verbunden ist, gebildet sind.

2. Kiste nach Anspruch 1, worin die vertikalen Rahmenteile (7) zwei durch Mittel (18) nach Art einer Schnappverbindung verbundene Teile (16, 17) aufweisen, so daß beim Ausstecken die oberen Teile (16) zusammen mit den daran befestigten Seitenplatten (4a; 4b) in die Kiste hineingefaltet werden können.

3. Kiste nach Anspruch 2, wobei die Kiste durch Vereinigen unterer abstehender Rahmenteile (14) der oberen Kiste entweder mit entsprechenden Öffnungen (21) der unteren vertikalen Rahmenteile (17) oder mit entsprechenden Öffnungen (13) der oberen vertikalen Rahmenteile (16) der unteren Kiste stapelbar ist.

4. Kiste nach einem der Ansprüche 1 bis 3, worin die hängemattenartige biegsame Schicht aus Segeltuch, imprägniertem Segeltuch, Leder, Gummi, Verbundmaterial, verstärktem Gummi oder verstärktem Kunststoffmaterial besteht.

5. Kiste nach einem der Ansprüche 1 bis 4, worin die hängemattenartige Schicht am Rahmen mittels eines Keilsystems befestigt ist, das durch Einfügen eines Hartkernmaterials (28) in einen entlang der sich seitlich erstreckenden Teile der Hängematte verlaufenden Saum (27) und einen durch den Basisrahmen und Hilfsmittel (25) geformten Schlitz gebildet ist.

## Revendications

1. Caisse particulièrement appropriée à la manipulation de lourds rouleaux de matériau en feuille qui comprend un cadre (1), un moyen pour retenir le rouleau et des parois, caractérisée en ce que le moyen pour retenir le rouleau est constitué par une couche (2) de type hamac en matériau flexible, qui est reliée au cadre.

2. Caisse selon la revendication 1, dans laquelle les pièces verticales (7) du cadre comprennent deux composants (16; 17) reliés sans pouvoir se détacher par un moyen (18), de sorte que lorsqu'on les désenfiche les composants supérieurs (16) peuvent se replier vers l'intérieur de la caisse en même temps que des panneaux latéraux (4a; 4b) qui leur sont fixés.

3. Caisse selon la revendication 2, dans laquelle la caisse est empilable grâce à l'association de composants de prolongement inférieur (14) du cadre de la caisse supérieure avec soit des ouvertures correspondantes (21) des composants (17) inférieurs de cadre vertical, soit avec des ouvertures correspondantes (13) des composants supérieurs (16) du cadre vertical de la caisse inférieure.

4. Caisse selon l'une quelconque des revendications 1 à 3, dans laquelle la couche flexible du type hamac est faite d'une toile, d'une toile imprégnée, de cuir, de caoutchouc, d'un matériau composite, de caoutchouc renforcé ou d'un matériau plastique renforcé.

5. Caisse selon l'une des revendications 1 à 4, dans laquelle la couche de type hamac est fixée au cadre au moyen d'un système de coin formé par insertion d'un matériau (28) formant âme dûre dans un ourlet (27) qui s'étend sur le côté des parties s'étendant latéralement du hamac et une fente formée par le cadre de base et un moyen auxiliaire (25).
